Europäisches Patentamt

European Patent Office

Office européen des brevets

(19)

(11) Publication number: **0 150 689**
**B1**

# EUROPEAN PATENT SPECIFICATION

(12)

(45) Date of publication of patent specification: **30.09.87**

(21) Application number: **84830347.5**

(22) Date of filing: **19.12.84**

(51) Int. Cl.⁴: **B 65 B 9/20,** B 65 B 53/00,
B 65 B 51/30

(54) Method and apparatus for packaging articles of any shape in a stretchable plastic film.

(30) Priority: **02.02.84 IT 1941184**

(43) Date of publication of application:
**07.08.85 Bulletin 85/32**

(45) Publication of the grant of the patent:
**30.09.87 Bulletin 87/40**

(84) Designated Contracting States:
**AT BE CH DE FR GB LI LU NL SE**

(56) References cited:
**FR-A-2 246 450**
**US-A-3 589 091**
**US-A-4 144 697**

(73) Proprietor: **PADECO S.A.**
**Roveredo (CH)**

(72) Inventor: **Galliano, Mariano**
**Via Pongiana**
**CH-6911 Comano (CH)**

(74) Representative: **Beneduce, Gianna et al**
**c/o Società Italiana Brevetti Via Carducci, 8**
**I-20123 Milano MI (IT)**

Courier Press, Leamington Spa, England.

## Description

The present invention concerns a process and corresponding apparatus for packaging in a stretchable plastic envelope, commonly known as "stretch film", articles having even irregular shape and size, such as agricultural produce, so that the stretchable film perfectly adheres on the article surface according to the preamble of claims 1 and 3 respectively as known from the document US—A—3589091. Both process and apparatus are suitable for continuous working that is without idle times between the end of the packaging of an article and the starting of the next one.

It is known that the packaging of many items, in plastic films, particularly in the transparent ones, is absolutely necessary for the freight and sale of such items to the customers. However, when such items to be packaged have changeable size and shape, such as for example vegetable and fruits, the mechanically packaging operations with the machines at present known may present considerable difficulties.

The machines presently known for packaging such articles, may be distinguished into two groups: those using an unstretchable tubular plastic film and those using a flat plastic film of stretch type. In the first case the machine inserts the item to be packaged into the tubular film, then the film bottom is sealed to form a bag which is after sealed up by welding or fastening. In such packages, however, the film adheres only on very few parts of the item and consequently there are formed recesses and irregularities which may cause besides a bigger size of the package, even the crack of the same during the subsequent handling of the packaged item. The machines known using instead the flat plastic film of "stretch type", wrap the film about the item after having stretched it lapping the film edges in the area where the envelope is going to be sealed. Also in this case the packages are irregular in shape and plastic material in excess is left on the package. Because of these and further difficulties, in many firms the packaging using a plastic film of stretch type is performed manually in order to benefit from the advantages shown thereby.

With regard to the machines using this type of film it is cited the U.S. Patent 3,589,091 wherein an apparatus is described for wrapping a package having regular and constant size and shape, with separate means for feeding, stretching and sealing the wrapping material.

Similarly, in the U.S. Patent 4,144,697, the packaging apparatus is provided for wrapping articles of the same size and shape provided with separate stations for sealing the film and means for cutting off the film. From these Patents, it is known to wrap the film adherent on the outer surface of the items, only when the latter are of constant size and shape.

Therefore it is an object of the present invention to provide a process which renders it possible to package mechanically items having any shape and size, in a plastic film of stretch type, the film being made elastically adherent on the outer surface of the items.

A further object of the present invention is to provide a process for packaging in a stretch film items having various shapes and sizes without interruption of the process, or in such a manner that no idle times occur between the end of an article packaging and the starting of the packaging of the following article.

In other words, the last operations of an item packaging cycle are performed simultaneously to the initial operations of the following item packaging cycle.

It is a further object of the present invention to provide a machine suitable to perform the above described processes, which is of a very simple structure, light, suitable to be carried anywhere, even in the harvest fields. The simplification of the machine structure is achieved by reducing the number of the moving members essentially to two and assigning them in turn to perform the main operations of the process, that is forming the bag with the stretchable film, introducing the item to be packaged into the bag so formed, sealing the bag full and taking it away while keeping the stretchable film under stretch.

The characteristics of the invention will be clear from the following description of a preferred not limitative embodiment thereof, which is illustrated by the accompanying drawings, where:

Figures 1 and 2 show schematically a side view and a front view respectively of the packaging machine according to the present invention;

Figure 3 is a cross-section along the line B—B of Fig. 2; and

Figures 4 to 7 show schematically the process according to the invention carried on by the machine shown in the other drawings.

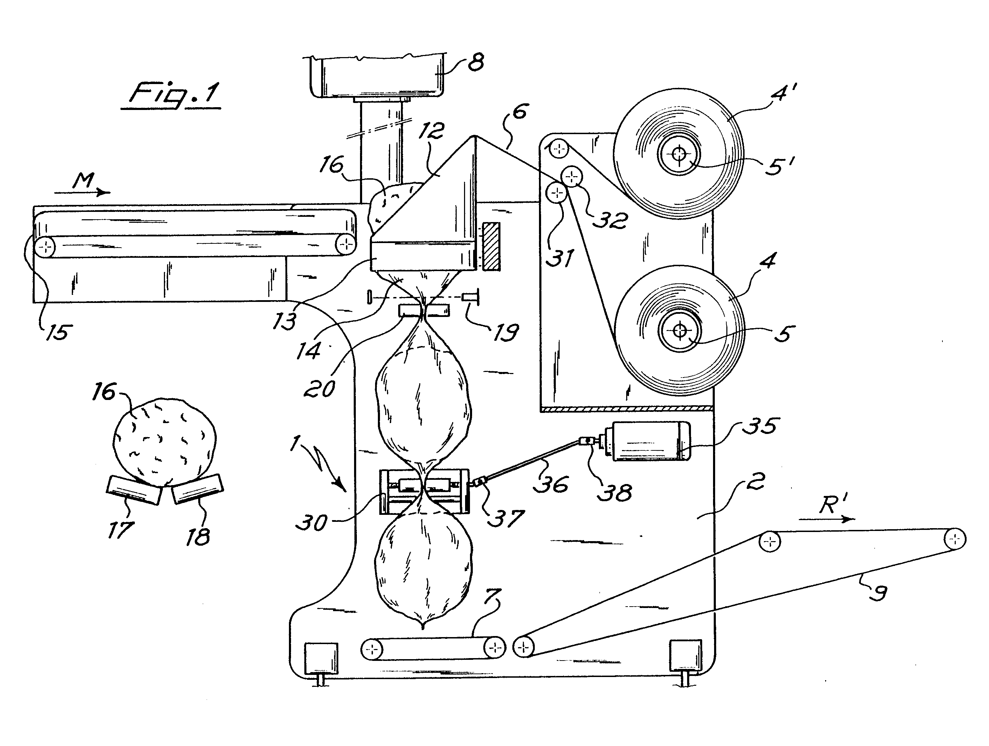

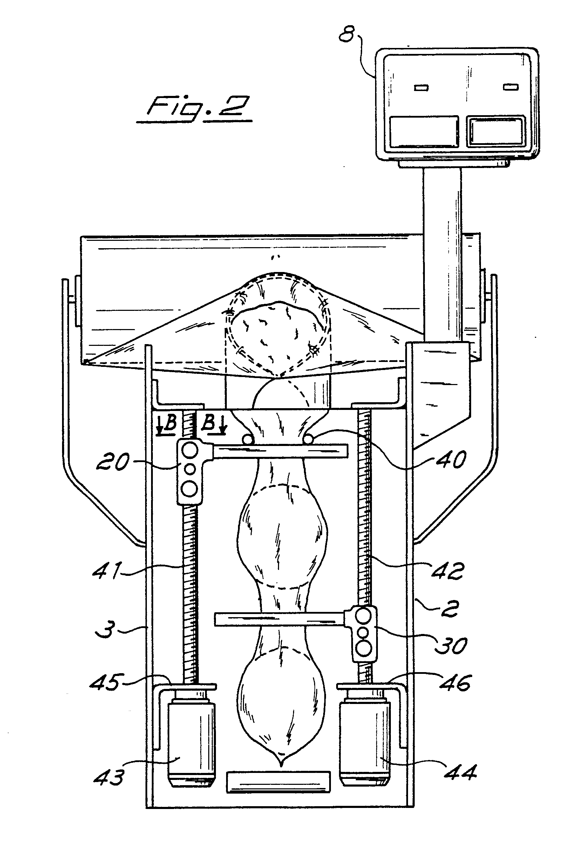

With reference to Figs. 1 and 2, the packaging machine 1 according to the invention, is essentially formed by a main frame consisting of two parallel plates 2 and 3 which support a film feeding system, an electric control system, a feeding system of the item to be packaged and a discharging system of the packaged item.

The feeding system of stretchable film web consists essentially of a roll 4 of the film 6, the roll being mounted over a roller 5 suitable maintained stationary in a controlled manner to provide the suitable tension to stretch the film. In Fig. 1 is indicated the presence of a second roll 4' mounted over the roller 5': this not necessary but preferable arrangement makes it possible at the end of one roll immediately to begin delivery of the film from the other roll without stopping the machine is working. Such arrangement makes it also possible to change the kind of the film, e.g. film of different thickness, color and size, without losing too much time.

The electronic control system 8 may be scheduled and is provided with visualizers, keys etc. to insert optionally desired modifications. The control means may be microprocessors.

At pre-production of the machine, the stretchable film web 6 which is rolled off from one of the rolls 4 or 4' is moved through transmission rollers (not shown) and tension rollers 31 and 32, to the mouth of a forming member consisting of the parts 12 and 13, of a body having cylindrical or prismatic cross-section, the upper part 12 of which, diagonally cut, is also called deviation neck. The function of such forming member is to reel the film 6, as a tube, so that its margins in overlapped position can be sealed by appropriate sealing members (not shown for easiness) to form the tubular film 14. Such sealing is done while the film is maintained under stretch in a way which will be described hereafter.

The item 16 is inserted by hand or by the carrier 15 and preferably consists of two adjacent and slanting belts 17 and 18 as shown in the section at Fig. 1 side. In the embodiment here described, concerning a machine fed from above (but obviously it may be also fed laterally) the item 16 falls by gravity from a first moving member 20 inside the tubular film 14, which is sealed at its bottom to form a bag. Such moving member successively carries on the tightening, stretching, sealing and severing of the tubular film 14 coming from the former 13.

The machine comprises a second moving member 30, substantially identical to 20 and having the same operation. Each of such moving members is operated by an independent electric engine such as for example the engine 35 of Fig. 1, through a push rod 36 and two articulated joints 37 and 38. This coupling is made necessary since the position of the moving members 20 and 30 moves vertically (or horizontally in the model having side feeding) during every operating cycle of the machine.

A detecting device 19 (for example a photoelectric cell) indicates to the moving members the beginning and end of the passage of the item to be packaged and thus it allows the lower and upper sealing of the tubular film 14 precisely as the item to be packaged.

The machine also comprises the rollers 40 which tighten the tubular film 14 perpendicularly to the traction caused by the moving members 20 and 30 so that the closure bag area is narrowed.

As it is shown in Fig. 2 the moving members 20 and 30 can move vertically by means of the rotating threaded rods 41 and 42 which are urged to rotate by the electric engines 43 and 44 secured on the machine base by means of the hangers 45 and 46 respectively.

The structure of each of the two moving members 20 and 30 is illustrated in more details in Fig. 3, showing a section along line B—B of Fig. 2. As it can be seen, each moving member 20 and 30 includes a C shaped supporting hanger 50, supplied with a central threaded hole 51, through which the rotating rod 41 (or 42) passes, such hole 51 being placed between the two guide holes 52 and 53. Between the parallel ends of the hanger 50 is mounted a threaded rod 54 engaging the inner threads of the cylindrical heads 55 and 56 of the horizontal arms 57 and 58 respectively, such arms forming a gripper for tightening, welding and severing the tubular film 14.

The arm 57 has a portion 59 (facing arm 58) which is electrically heated operating as welding member for the tubular film 14. The arm 58 is consisting of two spaced parallel portions, these too optionally heated for providing welding, which are combined with the compression springs 64. Between the portions 60 and 61 is situated a blade 62 supported by two shafts 63 integral with the arm 58. This structure is clearly illustrated with reference to the partial section shown at the side of Fig. 3. The arms 57 and 58 may be moved apart or close to each other by the threaded rod 54 having one end engaged in a known manner (not shown) with the articulated joint 37 of the corresponding engine, which according to the feeding received from the control system 8, determines the gripper closing (approaching of the arms 57 and 58) or the gripper opening (separation of the arms 57 and 58 to the position shown in Fig. 3).

When the two arms 57 and 58 are brought near each other by electric control, the tubular film 14 is tight and if at the same time the inner portions 59, 60 and 61 are heated, the tubular film may also be welded. When the tubular has to be cut the blade 62 moves out protruding from the front edges of the portions 60 and 61 (which move back under the pressure of the arm 57 causing the compression of the spring 64) and to allow such coming forward of the blade a corresponding longitudinal recess in the inner part 59 of the arm 57 is provided. When the arm 57 moves away from the arm 58, the compression on the spring 64 ends and consequently the portions 61 and 62 move forward and the blade 62 does not stick out anymore.

As it is shown in Fig. 2, the length of the arms 57 and 58 of the moving member 20 is such that the arms do not interfere with the rotating threaded rod of the corresponding moving member 30. This makes it possible to move the two moving members 20 and 30 even in opposite directions by means of suitable electric controls given to the two engines 43 and 44 and, keeping one gripper closed while the other is wide open, the operating control exchange between them may be achieved.

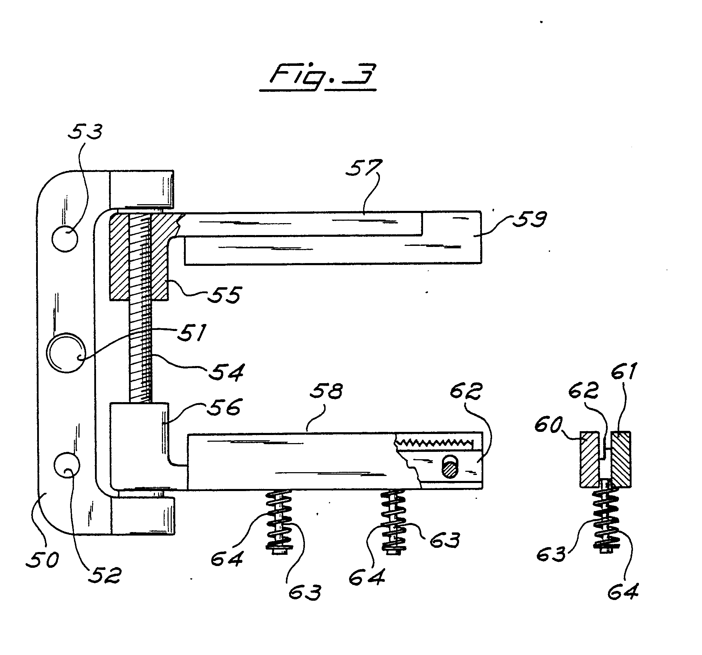

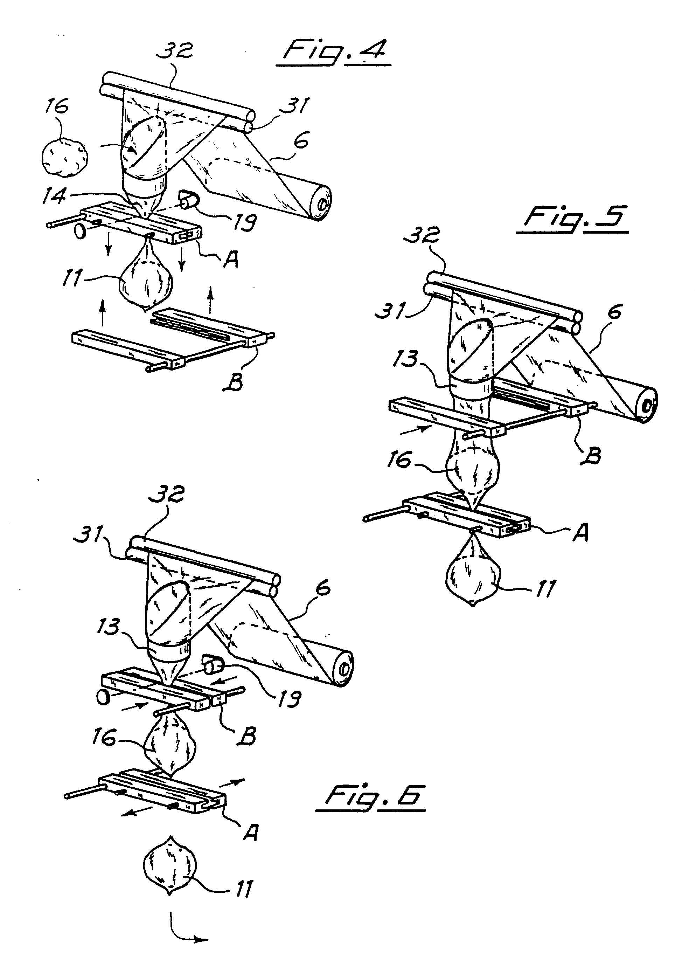

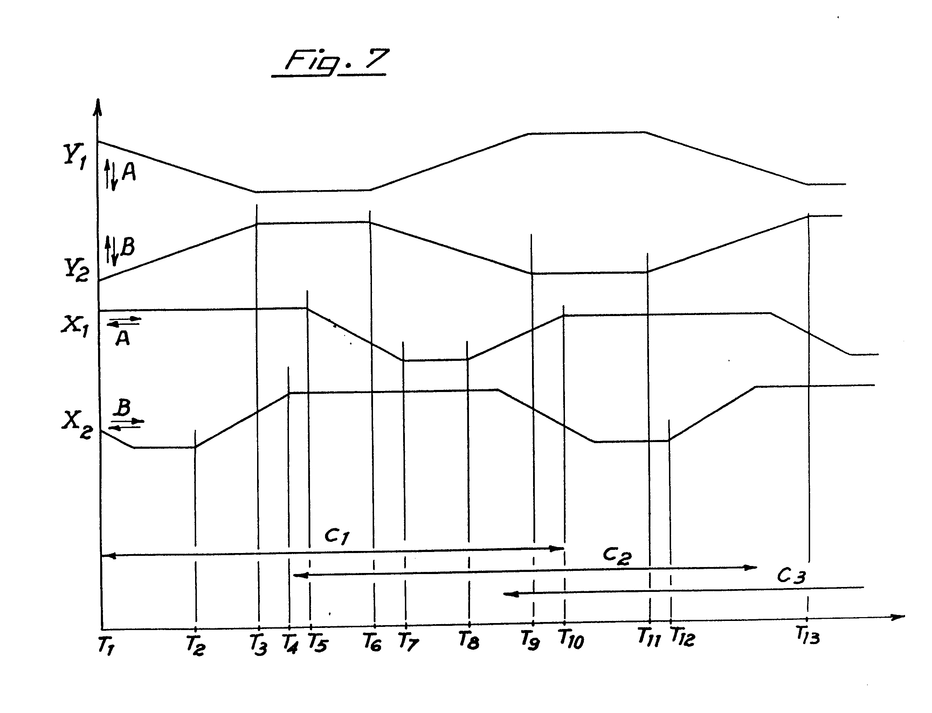

That will be illustrated in more detail with reference to Figs. 4, 5, 6 and 7. To avoid a long sequence of illustrations of the different structures represented by the moving members 20 and 30 during the machine operation, Figs. 4, 5 and 6 show three particular and explanatory structures while the diagrams in Fig. 7 schematically illustrate the complete machine operation. For easiness the gripper portions of the moving members 20 and 30 have been indicated by the letters A and B respectively.

Fig. 4 represents a disposition taken as starting disposition and corresponding to the time T1 of the diagram in Fig. 7; Fig. 5 represents the disposition of the different parts of the machine within T2 and T3 of the diagram in Fig. 7, while Fig. 6 corresponds to the time T5 of the same diagram.

With reference to Fig. 4 it can be seen that at the moment taken as the machine pre-production, the gripper A, having the upper position, is tight on the tubular film 14 and has already carried on the lower welding of said tubular film thus forming the bottom of the bag into which the item 16 will be introduced. As it will be later more clearly described, the gripper A has already carried on also the cut of the underneath full bag 11 which is however still maintained hanging on the gripper A because of its tightened position.

The gripper B is in its lower position and completely open. The distance between the grippers A and B thus corresponds at this moment to the largest possible distance according to the size of the items to be packaged. At the same time a new item 16 is introduced into the tubular 14 through the forming neck 12 and it prevents during its falling down that the light of the photocell 19 passes through, thus allowing the starting of the packaging cycle of the new item 16.

The next movements of the grippers A and B are illustrated in Fig. 4 by the bold-faced arrows indicating schematically that while the gripper A, maintained tightened, starts its descent movement, at the same time the gripper B, still open, starts its reascending movement. During its movement down, the gripper A keeps under stretch the tubular film 14 which results in A being slowed both by the resistance opposed by the forming member 13 and the resistance opposed by the roller 5 (or 5') suitably held in a controlled manner.

When the item 16 has completely overpassed the cell 19, and it does not prevent further passage of the light, the cell makes the gripper A to stop. In this way the tubular film 14 is cut precisely according to the size of item 16 without wasting the film thus obtaining a final packaging in which the film perfectly adheres on the whole outer surface of the item itself.

Fig. 5, where for simplicity the photocell 19 has not been indicated, shows the moment at which the item 16 has passed beyond the photocell, causing the stop of the gripper A in its lower position and the closure of the gripper B. In the following moments the gripper B will tighten completely, effecting welding of the tubular film 14 and severing of the underhanging full bag. In Fig. 5, since the gripper A is still tight about the tubular severed edges, the tubular appears as if it has not yet been cut.

In Fig. 6 there is shown the movement at which the gripper A starts its opening and its movement back upward. The gripper opening causes, by gravity, package 11 to fall onto the conveyor 7. At the same time a new item is allowed to fall inside the bag formed from the tubular 14 and the photocell causes the operating cycle to begin again, which comprises the complete opening of the gripper A, its upwardly movement starting and the contemporaneous descent of the gripper B, which remains tight and maintains under stretch the tubular film 14.

As it can be seen in Figs. 4, 5 and 6, the tubular film 14 is permanently maintained under stretch while the machine carries on the operations of forming the bag from the tubular film 14, package the item 16 and severing the packaging 11 from the tubular film 14.

The cyclic and continuous machine operation according to the present invention will appear clearly from the diagrams in Fig. 7 illustrating the cycles of the horizontal and vertical movements of the grippers A and B, in the sequence of the times T1 to T13, in performing the packaging cycles C1, C2, C3 corresponding to three items fed in sequence to the machine. The diagram Y1 concerns the vertical movements of the gripper A during the time considered, the diagram Y2 concerns the vertical movements of the gripper B during the considered time, X1 concerns the horizontal movements of the arms of the gripper A during the time considered and X2 concerns the horizontal movements of the arms of the gripper B during the time considered.

At the moment T1, corresponding to the starting of packaging cycle C1 referred to the first piece fed into the machine, the gripper A is placed in the upper position of its vertical movement and is tight, while the gripper B is open and placed in the lower position of its vertical stroke. The tubular portion tighten by the gripper A has been already cut (even if the portions result still joined each other because of the gripper tighten) and the welding heat is in progress. Falling of the first fed piece breaks the light ray of the photocell 19, determining a starting signal for the grippers, exactly at the moment T1. Such signal causes the pre-operation of the electric engines and consequently the descent of the gripper A (still tightened) and the contemporaneous rising of the gripper B (which instead is open to consent the crossing with the coming down gripper A). The stretch of the tubular film during the time T1 to T3 makes it possible that when the tubular film is severed at T10, the film, due ho the so-called "elastic memory" shrinks and finally adheres uniformly about the item without irregularities, sacks etc. The stretch is determined (in cycle C1) by the movement of the gripper A that, in its coming down, drags the tubular film against the resistance opposed by the forming neck and the tension rollers. During the coming down phase of the gripper A, it is reached by the coming up gripper B and after they meet, the tightening movement of the gripper B at the moment T2 starts. The stop of the gripper movement is operated, at the moment T3, by the photocell 19 itself, which detects the complete passage of the item fed. Indeed, when the item has completely gone beyond the light ray emitted by the lamp, the photocell becomes newly excited through the transparent film. The machine control unit provides then according to a signal change coming from the photocell, to produce stop signal to the grippers, optionally with the suitable temporal delays. It should be noted that the follow-up link of the gripper vertical movement to the photocell allows packaging of the item with a tubular length exactly dimensioned according to the item size. Being already made the lower closure of the tubular, its welding and cut at the start of the cycle, the presence of a proper station in a fixed position to sever the already prepared package is not necessary. Thus the machine unreels a tubular length exactly as necessary for the particular item contained inside the tubular film without wasting any material and increasing the rate of packaging for reduced size items.

During the range within the moments T3 and T5 (in which the gripper A is kept tight and in the lower position) the tubular film is maintained under stretch so that the plastic film is stretched and adherent to the item. At the moment T4, the gripper B, in the upper position and tightened, operates the severing of the tight tubular film and starts the welding phase. The cycle C2 thus starts by feeding a new item inside the newly formed bag, and, from the moment T6, it starts the coming up movement of the gripper A which contemporaneously carries on its opening up to the maximum value reached at T7. Contemporaneously, from the moment T6, on the photocell control, the gripper B starts the downward movement which stretches and keeps it up to the moment T9. The moment T8 indicates the starting of the ascendent gripper tightening (gripper A) and it corresponds substantially to the moment T2 of cycle C1 previously considered for the gripper B. The welding phase is delayed for a considerable part of range T4—T10 in accordance to the material used. The moment T10 corresponds to the end of the packaging cycle C1 of the first item and to the starting of the packaging cycle C3 of the third item fed into the bag kept tight by the same gripper A. In the meanwhile the cycle C2 for the second item occurs, which had started at the moment T4 and will end at an intermediate position during the packaging cycle C3 and so on.

The moments T11, T12 and T13 correspond functionally to the moments T1, T2 and T3 and have been considered only for clearly illustrating the process.

From the above described operation, two further favorable characteristics of the invention become evident. The first one is that the machine allows an automatic stop of the operations when the item feeding is lacking. Indeed, during the short interval T4 to T5, all the parts are at rest waiting for the signal from the photocell for a new cycle to begin (moment T4). In in this position, the item feeding is interrupted, the machine does not get any signal from the photocell and keeps such waiting position until the falling of a new item to be packaged. In this connection it should be noted that the diagrams of the Fig. 7 are substantially qualitative diagrams where only the sequence T1, T2, T3 etc. remains constant while the intervals between the moments may vary according to several outer factors (such as lacking in the item to be packaged; size of the item) or internal, owing to modifications of the time of the operating cycle as established by the user on the control console. The other important and consequent advantage is that the machine may be stopped at any moment without altering the operative structure. Indeed, if the operator interrupts feeding the machine in any position of the operative cycle, the machine will complete the packaging cycle in progress and take a position such as the one shown in Fig. 4 and afterward it will stop. The machine is thus ready for the next cycle with no material wasted nor necessity to reproduce the starting conditions etc. These two advantages are particularly interesting when using the machine directly in the fields, or as a packaging unity adaptable at the selling places, that is, in all those situations where the packaging may be strongly subjected to external factors.

From the above it will be evident that this process develops continuously and has no idle times for putting back the machine in operation since the only two movable members are identical and interchangeable. The packaging is of a high quality thanks to the constant stretch applied during the gripper coming down which is automatically adjusted to the size of the item to be packaged. Finally, due to the process ease and the electronic control, it is possible directly to vary almost all the operating parameters to adjust the machine to different operating conditions, for example modifying the stretch degree, packaging rate, welding length, etc.

Even if the invention has been described with a particular reference to a preferred embodiment thereof, it is not to be considered limited to this embodiment, but its scope includes all those obvious variations and/or modifications within the scope of the claims, for example in cases which provide for the presence of identical gripping, stretching, welding and severing members in the position to exchange the corresponding operation according to the assumed operative position.

**Claims**

1. Process for packaging items (16) of any shape in a stretchable plastic material foil (6) by the operations of forming a bag from the plastic material foil, inserting the item (16) into the bag so formed, sealing the filled bag and severing it from the plastic foil (6), characterized by carrying out all said operations while keeping the plastic material foil (6) under stretch.

2. Process for packaging a plurality of items (16) of any shape in a stretchable plastic material foil (6) by cyclical repetition of the process according to claim 1, characterized in that said cyclical repetition is carried on continuously and that the last operations of an item packaging cycle are performed simultaneously to the initial operations of the following item packaging cycle.

3. Machine for packaging items (16) of any shape in a stretchable plastic material foil (6), which comprises means (12, 13) for forming a continuous tubular film (14) from the plastic material foil (6), means for forming a bag by lower and lateral sealing said tubular film (14), means for inserting the items (16) into the so formed bag, means (20) for upper sealing the filled bag, characterized by that the means (12, 13) for forming the continuous tubular film (14) and the means (20, 30) for forming the bag operate causing also the stretching of the stretchable film.

4. Machine according to claim 3, characterized in that said means capable of forming under stretch the bag and sealing it, consists in moving members (20, 30) subjected of movement according to the feed motion of the stretchable film.

5. Machine accordimg to claim 4, characterized in that each one of said moving members (20, 30) comprises two portions (57, 58) which can be mutually moved along a plane perpendicular to the advancement motion, which are provided with the suitable means (59, 60, 61, 62) for tighting, welding and cutting the plastic material foil.

6. Machine according to claims 3, 4 and claim 5, characterized in that said moving members (20, 30) are two and are capable of being moved according to a reciprocating motion in opposite directions respectively.

7. Machine according to claim 6, characterized in that each one of said moving members (20, 30) is capable of being moved with a stroke of varying length and independent from that one of the other moving members.

8. Machine according to claim 7, characterized in that it comprises also control means (8) to coordinate the mutual movement of said moving members (20, 30).

9. Machine according to claim 8, characterized in that said control means are micro-processors.

10. Machine according to claim 4, characterized in that said moving members (20, 30) drag the tubular film (14) against the resistance of tension rollers (31, 32).

11. Machine according to claim 4, characterized in that a detecting device (19) indicates to the moving members (20, 30) the beginning and end of the item to be packaged.

12. Machine according to claim 11, characterized in that the detecting device is a photoelectric cell.

13. Machine according to claim 7 characterized in that a detecting device (19) stops the motion of the moving members (20, 30) when the item has moves past the detecting device.

14. Machine according to claim 4, characterized in that a roller (5) is held during the motion of the moving members (20, 30) to maintain the film stretched.

## Patentansprüche

1. Verfahren zur Verpackung von Gegenständen (16) beliebiger Form in einer verstreckbaren Kunststoffolie (6) durch die Arbeitsschritte des Bildens einer Tasche aus der Kunststoffolie, Einfügen des Gegenstandes (16) in die so gebildete Tasche, Versiegeln der gefüllten Tasche und Abtrennen derselben von der Kunststoffolie (6), dadurch gekennzeichnet, daß alle Arbeitsschritte durchgeführt werden, während die Kunststoffolie (6) unter Streckung gehalten wird.

2. Verfahren zur Verpackung einer Mehrzahl von Gegenständen (16) beliebiger Form in einer verstreckbaren Kunststoffolie (6) durch zyklische Wiederholung des Verfahrens nach Anspruch 1, dadurch gekennzeichnet, daß die zyklische Wiederholung kontinuierlich fortgeführt wird und daß die letzten Arbeitsschritte eines Gegenstandsverpackungszyklus gleichzeitig mit den Anfangsarbeitsschritten des folgenden Gegenstandsverpakkungszyklus durchgeführt werden.

3. Maschine zur Verpackung von Gegenständen (16) beliebiger Form in einer verstreckbaren Kunststoffolie (6), welche Mittel (12, 13) zur Bildung eines durchgehenden schlauchförmigen Films (14) aus der Kunststoffolie (6), Mittel zur Bildung einer Tasche durch Versiegeln des schlauchförmigen Films (14) am unteren Ende und seitlich, Mittel zum Einfügen der Gegenstände (16) in die so geformte Tasche, Mittel (20) zum Versiegeln der gefüllten Tasche an der Oberseite umfaßt, dadurch gekennzeichnet, daß die Mittel (12, 13) zur Bildung des durchgehenden schlauchförmigen Films (14) und die Mittel (20, 30) zur Bildung der Tasche im Betrieb auch das Verstrecken des verstreckbaren Films bewirken.

4. Maschine nach Anspruch 3, dadurch gekennzeichnet, daß die zur Bildung und Versiegelung der Tasche unter Verstreckung geeigneten Mittel aus beweglichen Gliedern (20, 30) bestehen, die entsprechend der Zuführungsbewegung des verstreckbaren Films einer Bewegung unterworfen werden.

5. Maschine nach Anspruch 4, dadurch gekgennzeichnet, daß jedes der beweglichen Glieder (20, 30) zwei Teile (57, 58) umfaßt, die gemeinsam entlang einer zur Vorschubbewegung senkrechten Ebene bewegbar sind und die mit geeigneten Mitteln (59, 60, 61, 62) zum Spannen, Schweißen und Schneiden der Kunststoffolie versehen sind.

6. Maschine nach den Ansprüchen 3, 4 und 5, dadurch gekennzeichnet, daß die beweglichen Glieder (20, 30) zwei sind und in oszillierender Bewegung in jeweils entgegengesetzten Richtungen bewegbar sind.

7. Maschine nach Anspruch 6, dadurch gekennzeichnet, daß jedes der beweglichen Glieder (20, 30) mit einem Hub variierender Länge und unabhängig von jenem der anderen beweglichen Glieder bewegbar ist.

8. Maschine nach Anspruch 7, dadurch gekennzeichnet, daß sie Steuermittl (8) zur Koordinierung der gemeinsamen Bewegung der beweglichen Glieder (20, 30) umfaßt.

9. Maschine nach Anspruch 8, dadurch gekennzeichnet, daß die Steuermittel Mikroprozessoren sind.

10. Maschine nach Anspruch 4, dadurch gekennzeichnet, daß die beweglichen Glieder (20, 30) den schlauchförmigen Film (14) gegen den Widerstand von Spannrollen (31, 32) ziehen.

11. Maschine nach Anspruch 4, dadurch gekennzeichnet, daß ein Detektionsgerät (19) den beweglichen Gliedern (20, 30) den Beginn und das Ende des zu verpackenden Gegenstandes anzeigt.

12. Maschine nach Anspruch 11, dadurch gekennzeichnet, daß das Detektionsgerät eine fotoelektrische Zelle ist.

13. Maschine nach Anspruch 7, dadurch gekennzeichnet, daß ein Detektionsgerät (19) die Bewegung der beweglichen Glieder (20, 30) stoppt, wenn sich der Gegenstand beim Detektionsgerät vorbeibewegt hat.

14. Maschine nach Anspruch 4, dadurch gekennzeichnet, daß eine Rolle (5) während der Bewegung der beweglichen Glieder (20, 30) festgehalten wird, um den Film gestreckt zu halten.

## Revendications

1. Procédé pour emballer des articles (16) d'une forme quelconque dans une feuille (6) de matériau plastique extensible par les opérations consistant à former un sac à partir de la feuille de matériau plastique, à introduire l'article (16) dans le sac ainsi formé, à sceller le sac rempli et à le séparer par coupure d'avec la feuille plastique (6), caractérisé par le fait que l'ensemble desdites opérations s'effectue tout en maintenant la feuille de matériau plastique (6) sous tension.

2. Procédé pour emballer une pluralité d'articles (16) de forme quelconque dans une feuille (6) de matériau plastique extensible par répétition cyclique du procédé conforme à la revendication 1, caractérisé en ce que ladite répétition cyclique s'effectue en continu et en ce que les dernières opérations du cycle d'emballage d'un article s'effectuent simultanément avec les opérations initiales du cycle d'emballage de l'article suivant.

3. Machine pour emballer des articles (16) de forme quelconque dans une feuille (6) de matériau plastique extensible, qui comporte des moyens (12, 13) pour former un film tubulaire continu (14) à partir de la feuille de matériau plastique (6), des moyens pour former un sac par scellement inférieure et latéral dudit film tubulaire (14), des moyens pour introduire les articles (16) dans le sac ainsi formsé, des moyens (20) pour le scellement supérieur du sac rempli caractérisée en ce que les moyens (12, 13) pour former le film tubulaire continu (14) et les moyens (20, 30) pour former le sac opèrent en causant également la mise sous tension du film extensible.

4. Machine selon la revendication 3, caractérisée en ce que lesdits moyens capables de former sous tension le sac et de le sceller consistent en éléments mobiles (20, 30) soumis à se déplacer en fonction du mouvement d'arrivée du film extensible.

5. Machine selon la revendication 4, caractérisée en ce que chacun desdits éléments mobiles (20, 30) comporte deux portions (57, 58) qui peuvent se déplacer l'une par rapport à l'autre dans un plan perpendiculaire au mouvement d'avancement et qui présentent les moyens convenables (59, 60, 61, 62) pour serrer, souder et couper la feuille de matériau plastique.

6. Machine selon les revendications 3, 4 et la revendication 5, caractérisée en ce que lesdits éléments mobiles (20, 30) sont deux et peuvent se déplacer selon un mouvement de va-et-vient dans des sens opposés respectivement.

7. Machine selon la revendication 6, caractérisée en ce que chacun desdits éléments mobiles (20, 30) peut se déplacer avec une course de longueur variable et indépendamment de l'autre des éléments mobiles.

8. Machine selon la revendication 7, caractérisée en ce qu'elle comporte également des moyens de commande (8) pour coordonner le mouvement mutuel desdits éléments mobiles (20, 30).

9. Machine selon la revendication 8, caractérisée en ce que lesdits moyens de commande sont des microprocesseurs.

10. Machine selon la revendication 4, caractérisée en ce que lesdits éléments mobiles (20, 30) tirent le film tubulaire (14) en agissant contre la résistance de rouleaux de tension (31, 32).

11. Machine selon la revendication 4, caractérisée en ce qu'un dispositif de détection (19) indique aux éléments mobiles (20, 30) le début et la fin de l'article à emballer.

12. Machine selon la revendication 11, caractérisée en ce que le dispositif de détection est une cellule photo-électrique.

13. Machine selon la revendication 7, caractérisée en ce qu'un dispositif de détection (19) arrête le mouvement des éléments mobiles (20, 30) lorsque l'article est passé au-delà du dispositif de détection.

14. Machine selon la revendication 4, caractérisée en ce qu'un rouleau (5) est retenu au cours du mouvement des éléments mobiles (20, 30) pour maintenir le film sous tension.

_Fig.1_

M

16

17    18

15

13

14

20

1

30

8

16

12

6

31    32

19

36    38

37

4'

5'

4

5

35

2

R'

9

3

0 150 689

*Fig.2*

Fig. 3

*Fig.4*

*Fig.5*

*Fig.6*

Fig. 7